# EUROPEAN PATENT SPECIFICATION

(11) **EP 2 343 223 B1**
(45) Date of publication and mention of the grant of the patent: **04.05.2016**
(21) Application number: 10189708.0
(22) Date of filing: 02.11.2010
(51) Int. Cl.: B60S 9/12

(54) **Leveling jack for vehicle**
Nivellierheber für ein Fahrzeug
Système de mise à niveau pour véhicule

(30) Priority: 06.01.2010 US 683335
(43) Date of publication of application: 13.07.2011
(73) Proprietor: Lippert Components Manufacturing, Inc., Goshen, IN 46528 (US)
(72) Inventor: Schwindaman, Michael, Cassopolis, MI 49031 (US); Rogers, Thomas, Cassopolis, MI 49031 (US); Howard, Michael, Elkhart, IN 46514 (US)
(74) Representative: Lipscombe, Martin John

(56) References cited:
- EP-A1- 1 232 993
- BR-U- 6 200 454
- DE-U1-202005 005 598
- JP-A- 2008 309 212
- US-A- 4 667 932

## Description

### Field of the Invention

This invention relates to a leveling and stabilization system for a motor vehicle, such as a recreational vehicle.

### Description of the Background of the Invention

When a recreational vehicle is parked for use, it is desirable that the vehicle be leveled and stabilized for the convenience of the inhabitants. Accordingly, it has become common to provide stabilization and leveling systems for recreational vehicles.

Commonly, these systems provide multiple leveling jacks (usually four) located on opposite corners of the vehicle. A centralized hydraulic system mounted within the vehicle is used to effect leveling and stabilization. The centralized hydraulic system includes a pump, reservoir, and appropriate hydraulic lines connecting the pump to the jacks located at each corner of the vehicle. Such systems are shown in U.S.

Patents Nos. 4,061,309; 4,165,861; 4,597,584; 4,743,037 and 4,746,133. In addition to the foregoing, which disclose hydraulic leveling systems, electric leveling jacks have also been used, as shown in U.S. Patent No. 6,722,635.

The hydraulic leveling systems using a centralized hydraulic system are relatively complex in construction and operation, and are costly to install and maintain.

Furthermore, hydraulic lines connecting the pump to the jacks are exposed to damage on the exterior of the vehicle. Furthermore, the pump, hydraulic manifold, hydraulic valves (usually four or more), all hydraulic hose assemblies and fittings, pressure switches, wiring harness, etc., are relatively bulky and the space needed inside the vehicle to house the centralized hydraulic system used is not insignificant. In addition, the centralized hydraulic system requires the user to top off hydraulic fluid and to bleed air from the system.

Document US4667932 A discloses a leveling jack according to the preamble of claim 1.

### SUMMARY OF THE INVENTION

The present invention provides a leveling jack for leveling and stabilizing a vehicle of the above-described type in which a leveling cylinder, a pump, and a fluid reservoir are all sealed within a common housing. It is contemplated that four of these jacks will be used as described above; however, since each of the jacks is a sealed unit, no hoses or fittings are necessary to connect the jacks to a centralized hydraulic system, and since both the pump and reservoir are within each sealed unit, the hydraulic manifold, centralized pump, and centralized reservoir are not needed. The piston within the housing of the present invention includes a piston rod which extends from the housing to engage the ground surface (the housing itself is mounted on the surface of the body of the vehicle) the pump is a reversible, bi-directional pump that extends the piston rod from the housing when the pump is operating in one direction and retracts the piston rod into the housing when the pump is operating in the reverse direction. According to an optional second embodiment of the invention, a second single-acting piston includes a rod extending from the housing to engage ground surface and a spring which retracts the rod.

Accordingly, in a first aspect, the invention provides a leveling jack for establishing clearance between a body surface and a ground surface, the jack comprising a piston, a fluid pump and a fluid reservoir within a common sealed housing mounted on one of said surfaces, said piston being slidable in said housing and including a piston rod extending from the housing to engage the other of said surfaces to control the clearance between said body surface and ground surface in response to sliding of the piston; and an internal fluid passage within said housing communicating said pump, said piston and said reservoir without fluid communication into said housing from a source exterior of the housing, wherein said pump is a reversible pump operable in one direction to pump fluid into said pressure chamber through a valve and in the other direction to allow fluid to withdraw from said chamber, and there is provided means for holding said valve open when the pump is operated in the other direction.

Preferably the jack is one wherein said housing includes a leveling cylinder defining a bore slidably receiving said piston, said piston rod extending from an end of said bore, said piston cooperating with one end of said bore to define a pressure chamber, and preferably wherein said pump is mounted in a pumping chamber defined within said housing, said reservoir being defined within said pumping chamber.

Said piston is advantageously a double acting piston in which said piston rod cooperates with the wall of said housing to define an annular chamber therebetween, another passage communicates said pump to said annular chamber, and said pump when operated in said other direction pumping fluid into said annular chamber and allowing fluid to withdraw from said annular chamber when the pump is operated in said one direction.

The jack preferably has another valve in said another passage to control fluid communication into said annular chamber, and means responsive to the fluid pressure level in the passage communicated with the pressure chamber to open said another valve when fluid is being pumped into the pressure chamber.

In one embodiment said piston is a single acting piston, and a spring yieldably urges said piston toward said one end of said one end of said bore.

Conveniently, said pump is mounted in a pumping chamber defined within said housing, said reservoir being defined within said pumping chamber between said pump and an end of the pumping chamber, said passage including a tube extending through said reservoir.

Preferably said leveling jack as claimed in claim 1, includes said pressure chamber as being an extending pressure chamber, wherein passages within said housing communicate said pump with said extending pressure chamber and said extending pressure chamber with said reservoir, and the valve within said passages communicating into said extending pressure chamber when the pump is operated in one direction, but preventing communication out of said extending pressure chamber when the pump is operated in said one direction.

The leveling jack is preferably one wherein a valve operating member responsive to operation of said pump in the other direction opens said first valve to allow communication from said pressure chamber to said reservoir when the pump is operated in the other direction.

More especially, the leveling jack of the second aspect of the invention is one wherein said piston is a double acting piston cooperating with opposite ends of said bore to define said extending pressure chamber between said piston and one end of said bore and an opposite retracting pressure chamber between said piston and the other end of the bore, said passage including a first branch communicating said pump to said extension pressure chamber and a second branch communicating said pump to the retracting pressure chamber, said first valve being mounted in said first branch.

Preferably said first valve controls communication into said extending pressure chamber when the pump is operated in said one direction, and a second valve mounted in said second branch controlling communication into said retracting pressure chamber when the pump is operated in the other direction.

Desirably said valve control means opens said first valve to allow communication to said reservoir when the pump is operated in said other direction and opens said second valve to said reservoir when said pump is operated in said one direction.

Preferably said leveling jack as claimed in claim 1, includes said pressure chamber as being an extending pressure chamber, wherein the reversible fluid pump and the reservoir communicate with said extending pressure chamber, the valve communicating said extending pressure chamber with said pump but preventing communication out of said extending pressure chamber when the pump is operated in said one direction, and a valve operating member responsive to operation of said pump in the other direction to open said first valve to allow communication from said pressure chamber to said reservoir when the pump is operated in the other direction.

In the jack described above, preferably said piston is a double acting piston cooperating with opposite ends of said bore to define said extending pressure chamber between said piston and one end of said bore and an opposite retracting pressure chamber between said piston and the other end of the bore, said passage including a first branch containing said first valve communicating said pump to said extension pressure chamber and a second branch communicating said pump to the retracting pressure chamber, and a second valve in said second branch communicating said pump with the retracting pressure chamber when the pump is operated in the other direction, said valve operating means acting on said second valve to permit communication from the retracting pressure chamber when the pump is operated in said one direction.

### BRIEF DESCRIPTION OF THE DRAWINGS

FIG. 1 is a perspective view of a leveling jack made pursuant to the teachings of the present invention;
FIG. 2 is a cross-sectional view taken substantially along lines 2-2 of FIG. 1, taken through the piston intermediate the top and bottom portions of the apparatus;
FIG. 3 is a view taken substantially along line 3-3 of FIG. 2;
FIG. 4 is a view taken substantially along line 4-4 of FIG. 2;
FIG. 5 is a view taken substantially along line 5-5 of FIG. 2;
FIG. 6 is a view similar to FIG. 1, but illustrating a different embodiment of the invention;
FIG. 7 is a schematic illustration of the hydraulic system used in the embodiment of FIGs. 1 - 5; and

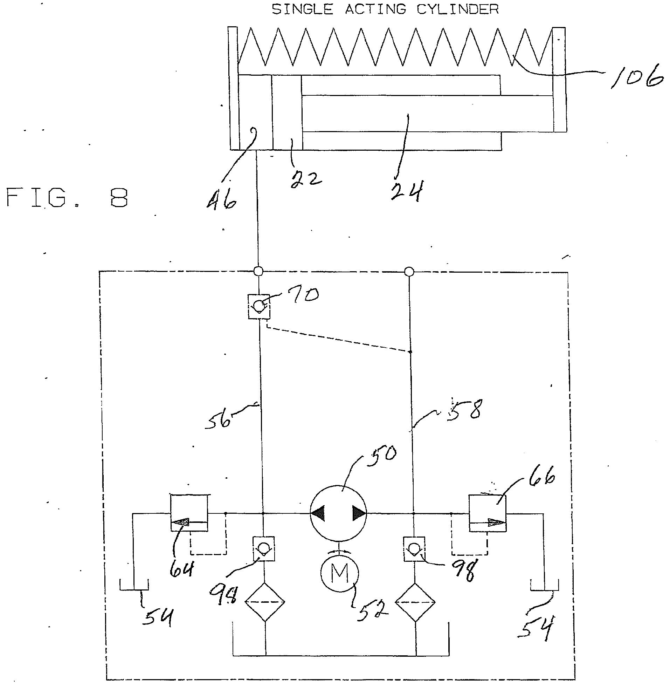

FIG. 8 is a schematic illustration of the hydraulic system used in the embodiment of FIG. 6.

### DETAILED DESCRIPTION OF INVENTION

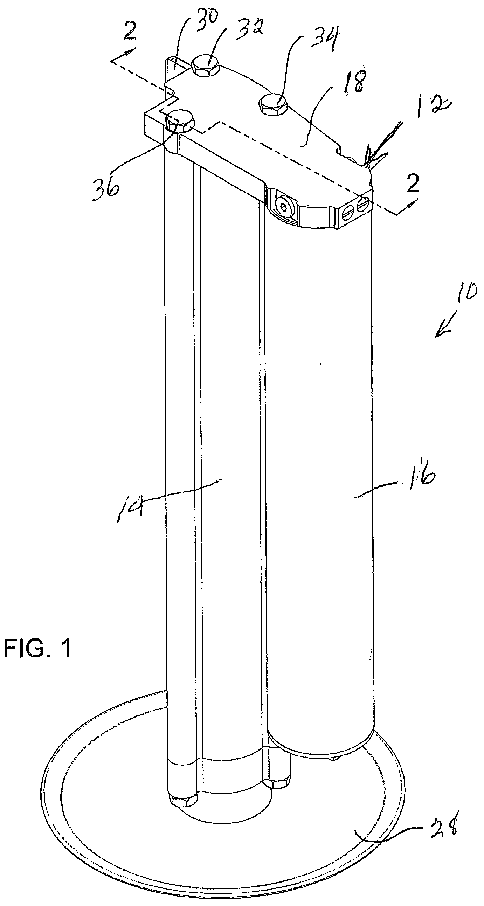

Referring now to FIGs. 1-5 of the drawings, the leveling jack 10 includes a housing 12 consisting of a leveling cylinder 14, a pump unit 16, and an end cap 18 extending between the leveling cylinder 14 and the pump unit 16. Although the leveling cylinder 14, pump unit 16, and end cap 18 are illustrated as separate components, housing 12 may be made as a single cast unit. Leveling cylinder 14 is defined by a circumferentially extending outer wall 20 which slidably receives a piston 22, to which a piston rod 24 is attached, which extends out of lower end 26 of the leveling cylinder 14. The end of the piston rod 24 extending out from the housing is attached to a ground engaging plate 28, which rests on ground when the leveling jack is used. A mounting bracket 30 is attached to the outer surface of the outer wall 20, and is aperatured to facilitate attachment to an exterior surface of a vehicle, such as a recreational vehicle, which uses the leveling jack 10.

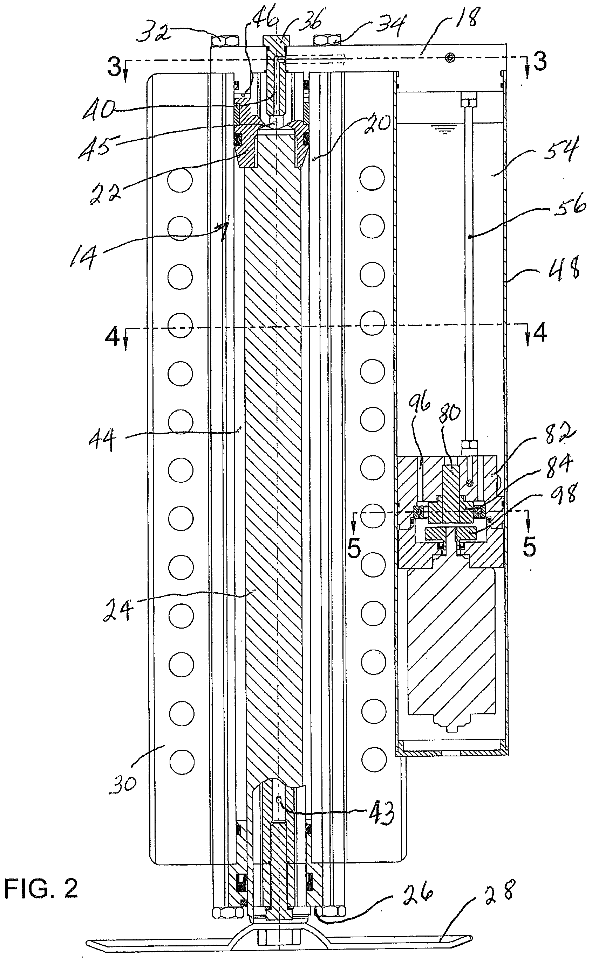

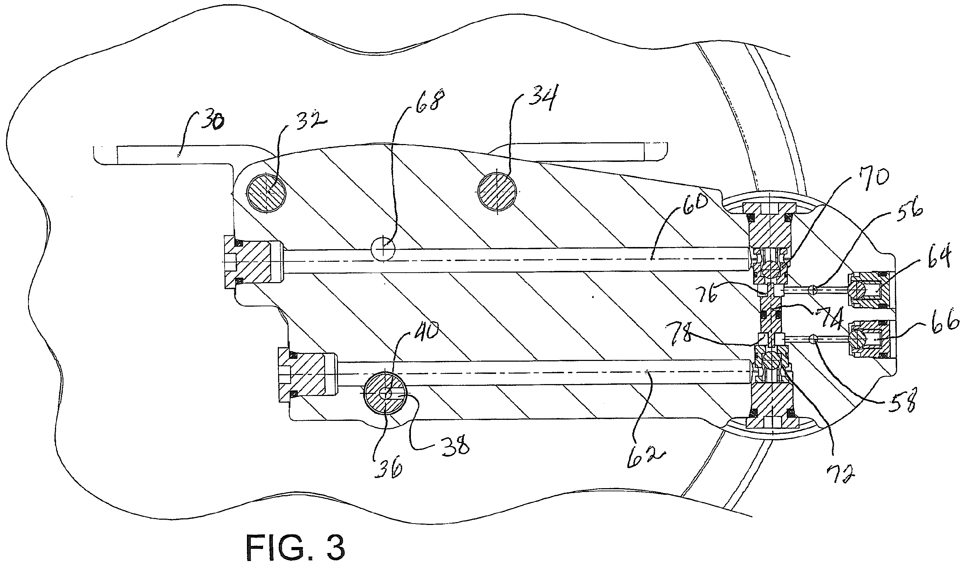

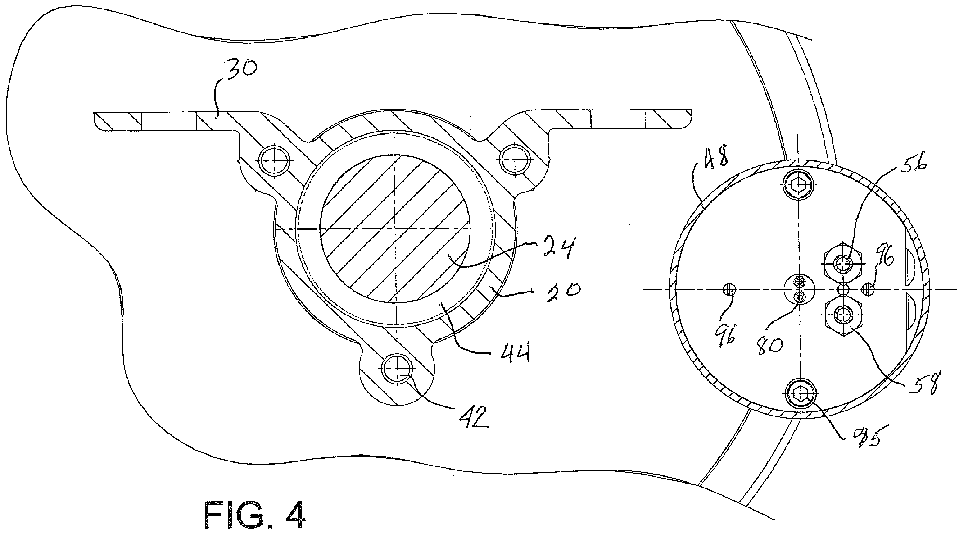

The cap 18 is attached to the top of the leveling cylinder 14 by bolts 32, 34, and 36. Bolts 32 and 34 are conventional, but bolt 36 is provided with a transverse passage 38 which intersects with longitudinal passage 40. A passage 42 (best seen in Figure 4) of about the same diameter as the bolt 36 extends along outer wall 20 and is provided with an opening 43 that extends through the wall 20 to permit fluid communicated through the passage 38 (best seen in Figure 3) and 40 of the bolt 36 to communicate in the annular retraction chamber 44 defined between the piston rod 24 and the inner circumferential surface of the outer wall 20. Piston 22 cooperates with the end cap 18 to define an extension chamber 46. When fluid pressure is communicated into extension pressure chamber 46, piston 20 and piston rod 24 are urged downwardly viewing the Figures, thereby extending the lower end of piston rod 24 out of the leveling cylinder 14. Conversely, when pressure is communicated into the annular retraction pressure chamber 44, the piston 20 is urged upwardly viewing the Figures, thereby withdrawing the piston rod into the cylinder 14. The pump unit 16 includes a housing 48 in which a bi-directional, reversible pump 50 (which will be hereinafter described) and a bi-directional, reversible motor 52 for driving the pump 50 are mounted, the motor 52 is connected to the pump 50 to operate the latter. The pump 50 cooperates with end cap 18 to define a reservoir 54 therebetween. A pair of tubes 56, 58 (only the tube 56 being shown in FIG. 2) extend through the reservoir 54 to communicate the pump 50 to passages 60, 62 (Figure 3) extending within the end cap 18.

Relief valves 64, 66 prevent over-pressure in the passages 60, 62. Passage 60 is communicated into the extension pressure chamber 46 through opening 68, and the passage 62 is communicated into the annular retraction pressure chamber 44 through the passages defined within the bolt 36. Check valves 70, 72 are mounted in the passages 60, 62 and permit flow into the corresponding pressure chambers 44, 46, but normally prevent flow from the pressure chambers. Shuttle piston 74 is slidable within a bore extending between the passages 60, 62 and is provided with offset faces 76, 78, which are exposed to the pressure levels in the passages 60, 62 respectively. Accordingly, when passage 60 is pressurized, the shuttle 74 is shifted to hold the check valve 72 open, thereby permitting fluid to vent from the annual retraction chamber 44, and when the passage 62 is pressurized, the shuttle piston 74 shifts to hold the check valve 70 open, thereby permitting fluid to vent from the extension pressure chamber 46.

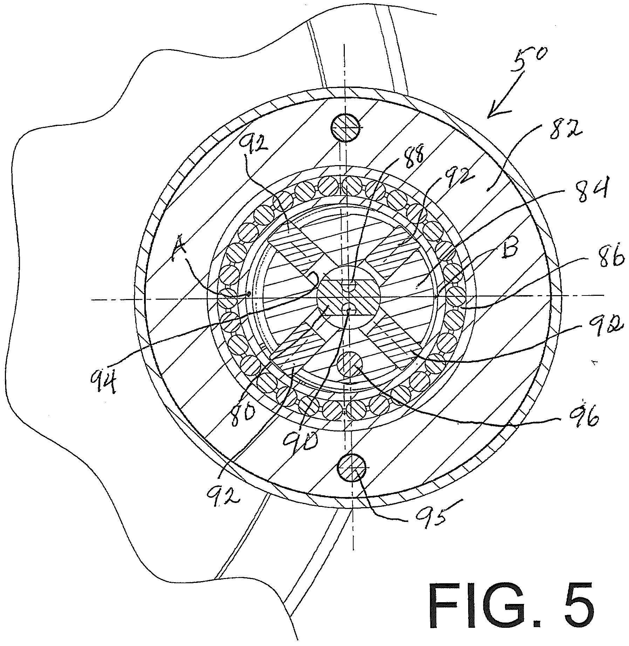

Referring now to the pump 50, a commutator 80 is non-rotatably mounted in a pump block 82 and is circumscribed by a rotor 84 which is mounted in pump block 82 for rotation relative to the commutator 80. A roller bearing 86 is mounted in the pump block 82 and circumscribes the rotor 84, but the center of rotation of the rotor 84 is offset from the center of the roller bearing 86. Accordingly, the clearance between the rotor and the roller bearing at point A (FIG. 5) is greater than the clearance between the rotor and the rotor bearing at point B, and the clearance tapers between points A and B. Notches 88, 90 are provided in the commutator 80 and are communicated to the tubes 56, 58 respectively. Circumferentially spaced pistons 92 are mounted in corresponding circumferentially spaced bores 94 and slide relative to the rotor. Accordingly, as each piston 92 approaches the point of maximum clearance A, fluid is drawn in through notch 90 and passage 58, and as the rotor continues rotation, the corresponding piston is urged inwardly, toward the commutator, thereby discharging fluid through the corresponding notch 88 and tube 56 assuming rotation in the clockwise direction. The pistons are maintained in contact with the inner race of the bearing 86 by centrifugal force. Accordingly, when the motor is reversed in the opposite (counterclockwise) direction, fluid is drawn in through notch 88 and its corresponding tube and is discharged through notch 90 and its corresponding tube. A pin 95 drives the rotor by its connection with plate 98 that is turned by the motor 52. Passages 96 extend through the pump block 82 to communicate make-up fluid to the rotor 84.

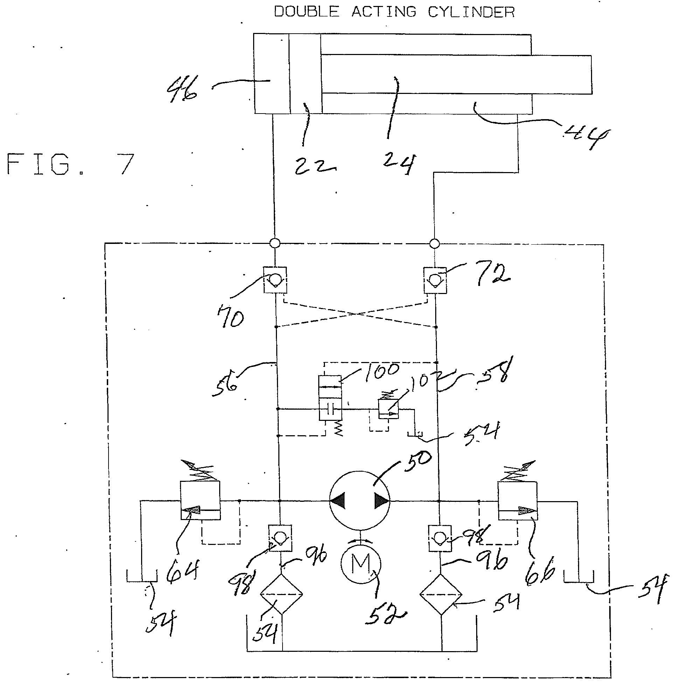

Referring to FIG. 7, operation of the leveling jack is illustrated diagramatically. The dashed lines connecting the check valve 70 with tube 58 and check valve 72 and tube 56 represent the operation of the shuttle piston 74. Check valves 98 are located in passages 96, but are not shown in other drawings, to permit fluid to be withdrawn from the reservoir 54 by the pump 50 when necessary. A valve 100 connects the tube 56 to reservoir 54 through a relief valve 102. The valve 100 is a pressure operated valve and is connected to the pressure in tubes 56, 58. When the piston 22 is being retracted into the extension pressure chamber 46, a greater amount of fluid is discharged from chamber 46 than is admitted into chamber 48, because of the volume consumed by piston rod 24. Accordingly, when the pressure in tube 58 indicates the chamber 44 is being pressurized, valve 100 is switched to permit communication into the reservoir, but when the pressure chamber 46 is being pressurized, valve 100 is in the position illustrated, blocking communication to the reservoir 54.

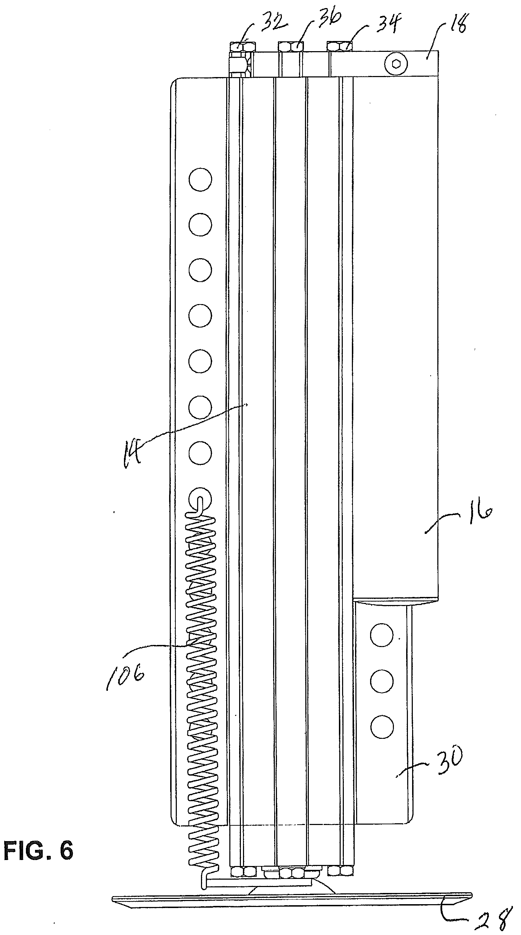

The embodiment in FIG. 6 is substantially the same as that of FIGs. 1-5, except that a single-acting piston is used instead of the double-acting piston illustrated in FIGs. 1-5. Accordingly, in the embodiment in FIG. 6, the annular chamber 44 is vented to atmosphere, and the piston is returned when pressure in pressure chamber 46 is released by a spring 106. Accordingly, tube 58 is stubbed off, and the pump 50, when driven in one direction, pressurizes extension pressure chamber 46 to drive the piston rod outwardly and when the pump is driven in the reverse direction, pressure in tube 58 holds check valve 70 open, thereby releasing the pressure in chamber 46, permitting the spring 106 to withdraw the piston into the housing.

This invention is not limited to the details above, but may be modified within the scope of the following claims.

## Claims

1. Leveling jack (10) for establishing clearance between a body surface and a ground surface comprising a piston (22), a fluid pump (16) and a fluid reservoir (54) within a common sealed housing (12) mounted on one of said surfaces, said piston being slidable in said housing and including a piston rod (24) extending from the housing to engage the other of said surfaces to control the clearance between said body surface and ground surface in response to sliding of the piston; and an internal fluid passage (42) within said housing communicating said pump, said piston and said reservoir without fluid communication into said housing from a source exterior of the housing, wherein said housing includes a leveling cylinder (14) defining a bore slidably receiving said piston, said piston cooperating with one end of said bore to define a pressure chamber, **characterized in that** said fluid pump is a reversible pump operable in one direction to pump fluid into said pressure chamber through a valve (70) and in the other direction to allow fluid to withdraw from said chamber, and means (74) for holding said valve open when the pump is operated in the other direction.

2. Leveling jack as claimed in claim 1, said piston rod extending from an end of said bore.

3. Leveling jack as claimed in claim 2, wherein said pump is mounted in a pumping chamber (48) defined within said housing, said reservoir being defined within said pumping chamber.

4. Leveling jack as claimed in claim 3, wherein said pumping chamber is defined within a cylinder (48) having an end closed by a cap (18) also closing said one end of said bore, said passage being defined in said cap.

5. Leveling jack as claimed in claim 4, wherein said pump is mounted in said chamber and cooperates with said end of the chamber to define said reservoir.

6. Leveling jack as claimed in claim 4, wherein said valve is a check valve mounted within said cap.

7. Leveling jack as claimed in claim 1, wherein said piston is a double acting piston in which said piston rod cooperates with the wall of said housing to define an annular chamber therebetween, another passage communicates said pump to said annular chamber, said pump when operated in said other direction pumping fluid into said annular chamber and allowing fluid to withdraw from said annular chamber when the pump is operated in said one direction.

8. Leveling jack as claimed in claim 7, having another valve (72) in said another passage to control fluid communication into said annular chamber, and means responsive to the fluid pressure level in the passage communicated with the pressure chamber to open said another valve when fluid is being pumped into the pressure chamber.

9. Leveling jack as claimed in claim 1, wherein said piston is a single acting piston, and a spring yieldably urges said piston toward said one end of said bore.

10. Leveling jack as claimed in claim 1, wherein said pump is mounted in a pumping chamber defined within said housing, said reservoir being defined within said pumping chamber between said pump and an end of the pumping chamber, said passage including a tube extending through said reservoir.

11. Leveling jack as claimed in claim 1, wherein said pressure chamber is an extending pressure chamber (46), and wherein passages within said housing communicate said pump with said extending pressure chamber and said extending pressure chamber with said reservoir, the valve within said passages and communicating into said extending pressure chamber when the pump is operated in said one direction, but preventing communication out of said extending pressure chamber when the pump is operated in said one direction.

12. Leveling jack as claimed in claim 11, wherein a valve operating member responsive to operation of said pump in the other direction opens said valve to allow communication from said pressure chamber to said reservoir when the pump is operated in the other direction.

13. Leveling jack as claimed in claim 11, wherein said piston is a double acting piston cooperating with opposite ends of said bore to define said extending pressure chamber between said piston and said one end of said bore and an opposite retracting pressure chamber (44) between said piston and the other end of the bore, said passage including a first branch communicating said pump to said extension pressure chamber and a second branch communicating said pump to the retracting pressure chamber, said valve being mounted in said first branch.

14. Leveling jack as claimed in claim 13, wherein said valve controls communication into said extending pressure chamber when the pump is operated in said one direction, and a second valve (72) mounted in said second branch controlling communication into said retracting pressure chamber when the pump is operated in the other direction.

15. Leveling jack as claimed in claim 14, wherein valve control means (74) opens said valve to allow communication to said reservoir when the pump is operated in said other direction and opens said second valve to said reservoir when said pump is operated in said one direction.

16. Leveling jack as claimed in claim 1, wherein said pressure chamber is an extending pressure chamber, the reversible fluid pump and the reservoir communicating with said extending pressure chamber, the valve communicating said extending pressure chamber with said pump but preventing communication out of said extending pressure chamber when the pump is operated in said one direction, and a valve operating member responsive to operation of said pump in the other direction to open said valve to allow communication from said pressure chamber to said reservoir when the pump is operated in the other direction.

17. Leveling jack as claimed in claim 16, wherein said piston is a double acting piston cooperating with opposite ends of said bore to define said extending pressure chamber between said piston and one end of said bore and an opposite retracting pressure chamber between said piston and the other end of the bore, said passage including a first branch containing said valve communicating said pump to said extension pressure chamber and a second branch communicating said pump to the retracting pressure chamber, and a second valve in said second branch communicating said pump with the retracting pressure chamber when the pump is operated in the other direction, said valve operating member acting on said second valve to permit communication from the retracting pressure chamber when the pump is operated in said one direction.

18. Leveling jack as claimed in claim 11 or 16, wherein said piston is a single acting piston responsive to fluid pressure in said extending pressure chamber to extend said piston rod from said housing, and a spring (106) yieldably urging said piston in a direction retracting said piston into said housing.

19. Leveling jack as claimed in claim 18, wherein valve control means holds said valve open to communicate said extension pressure chamber to the reservoir when the pump is operated in the other direction.

## Patentansprüche

1. Nivellierheber (10) zum Einrichten eines Abstands zwischen einer Karosseriefläche und einer Bodenfläche, umfassend: einen Kolben (22), eine Fluidpumpe (16) und ein Fluidreservoir (54) innerhalb eines gemeinsamen abgedichteten Gehäuses (12) zur Montage an einer der Flächen, wobei der Kolben im Gehäuse gleitbar ist und eine Kolbenstange (24) beinhaltet, die zum Eingriff in die andere der Flächen aus dem Gehäuse heraus ausfahrbar ist, um den Abstand zwischen der Karosseriefläche und der Bodenfläche in Reaktion auf das Gleiten des Kolbens zu kontrollieren; sowie einen internen Fluiddurchgang (42) innerhalb des Gehäuses, der für eine Verbindung mit der Pumpe, dem Kolben und dem Reservoir sorgt, ohne dass dem Gehäuse von einer außerhalb des Gehäuses befindlichen Quelle Fluid zugeführt werden muss, wobei das Gehäuse einen Nivellierzylinder (14) beinhaltet, der eine den Kolben gleitend aufnehmende Bohrung definiert, wobei der Kolben mit einem Ende der Bohrung zusammenwirkt, um eine Druckkammer zu definieren, **dadurch gekennzeichnet, dass** die Fluidpumpe eine umkehrbare Pumpe ist, die betrieben werden kann, um in einer Richtung Fluid durch ein Ventil (70) in die Druckkammer zu pumpen und in der anderen Richtung ein Abziehen von Fluid aus der Kammer zu ermöglichen, und wobei Mittel (74) vorgesehen sind, um das Ventil offen zu halten, wenn die Pumpe in der anderen Richtung betrieben wird.

2. Nivellierheber nach Anspruch 1, bei dem sich die Kolbenstange von einem Ende der Bohrung aus erstreckt.

3. Nivellierheber nach Anspruch 2, bei dem die Pumpe in einer innerhalb des Gehäuses definierten Pumpenkammer (48) montiert ist, wobei das Reservoir innerhalb der Pumpenkammer definiert ist.

4. Nivellierheber nach Anspruch 3, bei dem die Pumpenkammer innerhalb eines Zylinders (48) mit einem durch eine Kappe (18) verschlossenen Ende definiert ist, die auch das eine Ende der Bohrung verschließt, wobei der Durchgang in der Kappe definiert ist.

5. Nivellierheber nach Anspruch 4, bei dem die Pumpe in der Kammer montiert ist und mit dem Ende der Kammer zusammenwirkt, um das Reservoir zu definieren.

6. Nivellierheber nach Anspruch 4, bei dem das Ventil ein innerhalb der Kappe montiertes Rückschlagventil ist.

7. Nivellierheber nach Anspruch 1, bei dem der Kolben ein doppeltwirkender Kolben ist, bei dem die Kolbenstange mit der Wand des Gehäuses zusammenwirkt, um dazwischen eine ringförmige Kammer zu definieren, wobei ein anderer Durchgang die Pumpe mit der ringförmigen Kammer verbindet, und wobei die Pumpe, wenn sie in der anderen Richtung betrieben wird, Fluid in die ringförmige Kammer pumpt und es ermöglicht, dass Fluid aus der ringförmigen Kammer abgezogen wird, wenn die Pumpe in der einen Richtung betrieben wird.

8. Nivellierheber nach Anspruch 7, der ein anderes Ventil (72) im anderen Durchgang, um die Fluidverbindung in die ringförmige Kammer hinein zu kontrollieren, sowie Mittel hat, die auf das Fluiddruckniveau im mit der Druckkammer in Verbindung stehenden Durchgang reagieren, um das andere Ventil zu öffnen, wenn Fluid in die Druckkammer hineingepumpt wird.

9. Nivellierheber nach Anspruch 1, bei dem der Kolben ein einfachwirkender Kolben ist und eine Feder den Kolben nachgiebig hin zum einen Ende der Bohrung drängt.

10. Nivellierheber nach Anspruch 1, bei dem die Pumpe in einer innerhalb des Gehäuses definierten Pumpenkammer montiert ist, wobei das Reservoir innerhalb der Pumpenkammer zwischen der Pumpe und einem Ende der Pumpenkammer definiert ist, und wobei der Durchgang ein sich durch das Reservoir erstreckendes Rohr beinhaltet.

11. Nivellierheber nach Anspruch 1, bei dem die Druckkammer eine ausfahrbare Druckkammer (46) ist, wobei Durchgänge innerhalb des Gehäuses dafür sorgen, dass die Pumpe mit der ausfahrbaren Druckkammer und die ausfahrbare Druckkammer mit dem Reservoir in Verbindung stehen, und wobei das Ventil innerhalb der Durchgänge in die ausfahrbare Druckkammer hinein in Verbindung steht, wenn die Pumpe in der einen Richtung betrieben wird, jedoch eine Verbindung aus der ausfahrbaren Druckkammer heraus verhindert wird, wenn die Pumpe in der einen Richtung betrieben wird.

12. Nivellierheber nach Anspruch 11, bei dem ein Ventilbetätigungselement, das auf einen Betrieb der Pumpe in der anderen Richtung reagiert, das Ventil öffnet, um eine Verbindung von der Druckkammer zum Reservoir zuzulassen, wenn die Pumpe in der anderen Richtung betrieben wird.

13. Nivellierheber nach Anspruch 11, bei dem der Kolben ein doppeltwirkender Kolben ist, der mit gegenüberliegenden Enden der Bohrung zusammenwirkt, um die ausfahrbare Druckkammer zwischen dem Kolben und dem einen Ende der Bohrung sowie eine gegenüberliegende einfahrbare Druckkammer (44) zwischen dem Kolben und dem anderen Ende der Bohrung zu definieren, wobei der Durchgang einen ersten Abzweig, der die Pumpe mit der ausfahrbaren Druckkammer verbindet, und einen zweiten Abzweig, der die Pumpe mit der einfahrbaren Druckkammer verbindet, beinhaltet, wobei das erste Ventil im ersten Abzweig montiert ist.

14. Nivellierheber nach Anspruch 13, bei dem das Ventil die Verbindung in die ausfahrbare Druckkammer hinein kontrolliert, wenn die Pumpe in der einen Richtung betrieben wird, wobei zweite Ventil (72) im zweiten Abzweig montiert ist, um die Verbindung in die einfahrbare Druckkammer hinein zu kontrollieren, wenn die Pumpe in der anderen Richtung betrieben wird.

15. Nivellierheber nach Anspruch 14, bei dem das Ventilbetätigungsmittel (74) das Ventil öffnet, um eine Verbindung mit dem Reservoir zuzulassen, wenn die Pumpe in der anderen Richtung betrieben wird, und das zweite Ventil zum Reservoir öffnet, wenn die Pumpe in der einen Richtung betrieben wird.

16. Nivellierheber nach Anspruch 1, bei dem die Druckkammer eine ausfahrbare Druckkammer ist, wobei die umkehrbare Fluidpumpe und das Reservoir mit der ausfahrbaren Druckkammer in Verbindung stehen, wobei das Ventil die ausfahrbare Druckkammer mit der Pumpe verbindet, jedoch eine Verbindung aus der ausfahrbaren Druckkammer heraus verhindert, wenn die Pumpe in der einen Richtung betrieben wird, und wobei ein Ventilbetätigungsmittel auf einen Betrieb der Pumpe in der anderen Richtung reagiert und das Ventil öffnet, um eine Verbindung von der Druckkammer zum Reservoir zuzulassen, wenn die Pumpe in der anderen Richtung betrieben wird.

17. Nivellierheber nach Anspruch 16, bei dem der Kolben ein doppeltwirkender Kolben ist, der mit gegenüberliegenden Enden der Bohrung zusammenwirkt, um die ausfahrbare Druckkammer zwischen dem Kolben und einem Ende der Bohrung sowie eine gegenüberliegende einfahrbare Druckkammer zwischen dem Kolben und dem anderen Ende der Bohrung zu definieren, wobei der Durchgang einen ersten Abzweig, der das Ventil enthält, um die Pumpe mit der ausfahrbaren Druckkammer zu verbinden, und einen zweiten Abzweig, um die Pumpe mit der einfahrbaren Druckkammer zu verbinden, sowie ein zweites Ventil im zweiten Abzweig beinhaltet, der die Pumpe mit der einfahrbaren Druckkammer verbindet, wenn die Pumpe in der anderen Richtung betrieben wird, wobei das Ventilbetätigungselement auf das zweite Ventil einwirkt, um eine Verbindung aus der einfahrbaren Druckkammer zuzulassen, wenn die Pumpe in der einen Richtung betrieben wird.

18. Nivellierheber nach Anspruch 11 oder 16, bei dem der Kolben ein einfachwirkender Kolben ist, der auf Fluiddruck in der ausfahrbaren Druckkammer reagiert, um den Kolben aus dem Gehäuse auszufahren, und wobei eine Feder (106) den Kolben nachgiebig in eine Richtung drängt, um den Kolben in das Gehäuse einzufahren.

19. Nivellierheber nach Anspruch 18, bei dem ein Ventilkontrollmittel das Ventil offen hält, um die ausfahrbare Druckkammer mit dem Reservoir zu verbinden, wenn die Pumpe in der anderen Richtung betrieben wird.

## Revendications

1. Vérin de mise à niveau (10) pour établir un dégagement entre une surface de corps et une surface de sol, comprenant un piston (22), une pompe à fluide (16) et un réservoir de fluide (54) à l'intérieur d'un boîtier scellé commun (12) qui est monté sur une première desdites surfaces, ledit piston pouvant coulisser dans ledit boîtier et comprenant une tige de piston (24) qui s'étend à partir du boîtier pour engager l'autre desdites surfaces afin de commander le dégagement entre ladite surface de corps et la surface de sol en réponse à un coulissement du piston; et
un passage de fluide interne (42) à l'intérieur dudit boîtier qui fait communiquer ladite pompe, ledit piston et ledit réservoir sans établir une communication fluidique dans ledit boîtier à partir d'une source extérieure du boîtier,
dans lequel ledit boîtier comprend un cylindre de mise à niveau (14) qui définit un alésage qui reçoit ledit piston de façon coulissante, ledit piston coopérant avec une première extrémité dudit alésage pour définir une chambre de pression,
**caractérisé en ce que** ladite pompe à fluide est une pompe réversible actionnable dans une première direction pour pomper un fluide dans ladite chambre de pression à travers une soupape (70) et dans l'autre direction de manière à permettre au fluide d'être retiré à partir de ladite chambre, et des moyens (74) pour maintenir ladite soupape ouverte lorsque la pompe est actionnée dans l'autre direction.

2. Vérin de mise à niveau selon la revendication 1, dans lequel ladite tige de piston s'étend à partir d'une extrémité dudit alésage.

3. Vérin de mise à niveau selon la revendication 2, dans lequel ladite pompe est montée dans une chambre de pompage (48) définie à l'intérieur dudit boîtier, ledit réservoir étant défini à l'intérieur de ladite chambre de pompage.

4. Vérin de mise à niveau selon la revendication 3, dans lequel ladite chambre de pompage est définie à l'intérieur d'un cylindre (48) présentant une extrémité fermée par une coiffe (18), fermant également ladite première extrémité dudit alésage, ledit passage étant défini dans ladite coiffe.

5. Vérin de mise à niveau selon la revendication 4, dans lequel ladite pompe est montée dans ladite chambre et coopère avec ladite extrémité de la chambre pour définir ledit réservoir.

6. Vérin de mise à niveau selon la revendication 4, dans lequel ladite soupape est une soupape antiretour montée à l'intérieur de ladite coiffe.

7. Vérin de mise à niveau selon la revendication 1, dans lequel ledit piston est un piston à double effet dans lequel ladite tige de piston coopère avec la paroi dudit boîtier pour définir une chambre annulaire entre celles-ci, un autre passage fait communiquer ladite pompe avec ladite chambre annulaire, ladite pompe, lorsqu'elle est actionnée dans ladite autre direction, pompant du fluide dans ladite chambre annulaire et permettant au fluide de se retirer à partir de ladite chambre annulaire lorsque la pompe est actionnée dans ladite première direction.

8. Vérin de mise à niveau selon la revendication 7, comprenant une autre soupape (72) dans ledit un autre passage afin de commander une communication fluidique dans ladite chambre annulaire, et des moyens sensibles au niveau de pression de fluide dans le passage mis en communication avec la chambre de pression pour ouvrir ladite autre soupape lorsqu'un fluide est pompé dans la chambre de pression.

9. Vérin de mise à niveau selon la revendication 1, dans lequel ledit piston est un piston à simple effet, et un ressort pousse de façon élastique ledit piston en direction de ladite première extrémité dudit alésage.

10. Vérin de mise à niveau selon la revendication 1, dans lequel ladite pompe est montée dans une chambre de pompage définie à l'intérieur dudit boîtier, ledit réservoir étant défini à l'intérieur de ladite chambre de pompage entrer ladite pompe et une extrémité de la chambre de pompage, ledit passage comprenant un tube qui s'étend à travers ledit réservoir.

11. Vérin de mise à niveau selon la revendication 1, dans lequel ladite chambre de pression est une chambre de pression d'extension (46), et dans lequel des passages à l'intérieur dudit boîtier font communiquer ladite pompe avec ladite chambre de pression d'extension et ladite chambre de pression d'extension avec ledit réservoir, la soupape à l'intérieur desdits passages communicant dans ladite chambre de pression d'extension lorsque la pompe est actionnée dans ladite première direction, mais empêchant toute communication hors de ladite chambre de pression d'extension lorsque la pompe est actionnée dans ladite première direction.

12. Vérin de mise à niveau selon la revendication 11, dans lequel un élément d'actionnement de soupape sensible à un actionnement de ladite pompe dans l'autre direction ouvre ladite soupape de manière à permettre une communication à partir de ladite chambre de pression jusqu'audit réservoir lorsque la pompe est actionnée dans l'autre direction.

13. Vérin de mise à niveau selon la revendication 11, dans lequel ledit piston est un piston à double effet qui coopère avec des extrémités opposées dudit alésage pour définir ladite chambre de pression d'extension entre ledit piston et ladite une première extrémité dudit alésage, et une chambre de pression de rétraction opposée (44) entre ledit piston et l'autre extrémité de l'alésage, ledit passage comprenant une première branche qui fait communiquer ladite pompe avec ladite chambre de pression d'extension et une deuxième branche qui fait communiquer ladite pompe avec ladite chambre de pression de rétraction, ladite soupape étant montée dans ladite première branche.

14. Vérin de mise à niveau selon la revendication 13, dans lequel ladite soupape commande la communication dans ladite chambre de pression d'extension lorsque la pompe est actionnée dans ladite première direction, et une deuxième soupape (72) montée dans ladite deuxième branche commande la communication dans ladite chambre de pression de rétraction lorsque la pompe est actionnée dans l'autre direction.

15. Vérin de mise à niveau selon la revendication 14, dans lequel des moyens de commande de soupape (74) ouvrent ladite soupape de manière à permettre une communication avec ledit réservoir lorsque la pompe est actionnée dans ladite autre direction et ouvrent ladite deuxième soupape vers ledit réservoir lorsque ladite pompe est actionnée dans ladite première direction.

16. Vérin de mise à niveau selon la revendication 1, dans lequel ladite chambre de pression est une chambre de pression d'extension, la pompe à fluide réversible et le réservoir communiquant avec ladite chambre de pression d'extension, la soupape faisant communiquer ladite chambre de pression d'extension avec ladite pompe mais empêchant toute communication hors de ladite chambre de pression d'extension lorsque la pompe est actionnée dans ladite première direction, et un élément d'actionnement de soupape sensible à un actionnement de ladite pompe dans l'autre direction pour ouvrir ladite soupape de manière à permettre une communication à partir de ladite chambre de pression jusqu'audit réservoir lorsque la pompe est actionnée dans l'autre direction.

17. Vérin de mise à niveau selon la revendication 16, dans lequel ledit piston est un piston à double effet qui coopère avec des extrémités opposées dudit alésage pour définir ladite chambre de pression d'extension entre ledit piston et une première extrémité dudit alésage, et une chambre de pression de rétraction opposée entre ledit piston et l'autre extrémité de l'alésage, ledit passage comprenant une première branche contenant ladite soupape qui met en communication ladite pompe avec ladite chambre de pression d'extension et une deuxième branche qui met en communication ladite pompe avec la chambre de pression de rétraction, et une deuxième soupape dans ladite deuxième branche qui fait communiquer ladite pompe avec ladite chambre de pression de rétraction lorsque la pompe est actionnée dans l'autre direction, ledit élément d'actionnement de soupape agissant sur ladite deuxième soupape afin de permettre une communication à partir de la chambre de pression de rétraction lorsque la pompe est actionnée dans ladite première direction.

18. Vérin de mise à niveau selon la revendication 11 ou 16, dans lequel ledit piston est un piston à simple effet sensible à une pression de fluide dans ladite chambre de pression d'extension pour étendre ladite tige de piston à partir dudit boîtier, et un ressort (106) qui pousse de façon élastique ledit piston dans une direction de rétraction dudit piston dans ledit boîtier.

19. Vérin de mise à niveau selon la revendication 18, dans lequel des moyens de commande de soupape maintiennent ladite soupape ouverte afin de faire communiquer ladite chambre de pression d'extension avec le réservoir lorsque la pompe est actionnée dans l'autre direction.
